## Europäisches Patentamt

## European Patent Office

## Office européen des brevets

(19)

(11) Veröffentlichungsnummer: **0 014 348**
**B1**

(12) # EUROPÄISCHE PATENTSCHRIFT

(45) Veröffentlichungstag der Patentschrift:
**23.04.86**

(51) Int. Cl.⁴: **H 04 N 5/00,** H 04 N 7/06

(21) Anmeldenummer: **80100219.7**

(22) Anmeldetag: **17.01.80**

(54) **Verfahren zum Übertragen und Vorrichtung zum Empfangen stereophoner Signale auf zwei gleichwertigen Einzelkanälen, insbesondere Zwei-Trägerverfahren beim Fernsehton.**

(30) Priorität: **26.01.79 DE 2902933**

(43) Veröffentlichungstag der Anmeldung:
**20.08.80 Patentblatt 80/17**

(45) Bekanntmachung des Hinweises auf die Patenterteilung:
**23.04.86 Patentblatt 86/17**

(84) Benannte Vertragsstaaten:
**AT BE CH GB IT NL SE**

(56) Entgegenhaltungen:
**DE - A - 2 827 159**
**US - A - 4 048 654**

**JOURNAL OF THE AUDIO ENGINEERING SOCIETY, Band 23, Nr. 10, Dezember 1975, Seiten 802-805 New York, U.S.A. E.L. TORICK: "AM Stereophonic Broadcasting - An Historical Review"**
**JOURNAL OF THE ASIA ELECTRONICS UNION, Band 3, Nr. 2, 1970, Seiten 12-21 Tokyo, JP. Y. NUMAGUCHI: "Television Sound Multiplexing System"**
**RUNDFUNKTECHNISCHE MITTEILUNGEN, Band 23, Nr. 1, Februar 1979, Seiten 10-13 Hamburg, DE. M.AIGNER et al.: "Eine neue Stereomatrizierung für den Fernsehton"**

(73) Patentinhaber: **Interessengemeinschaft für Rundfunkschutzrechte GmbH Schutzrechtsverwertung & Co. KG., Bahnstrasse 62, D-4000 Düsseldorf 1 (DE)**

(72) Erfinder: **Aigner, Max, Dipl.-Ing., Spitzwegstrasse 63, D-8012 Ottobrunn (DE)**

(74) Vertreter: **Konle, Tilmar, Dipl.-Ing., Benderstrasse 23a, D-8000 München 60 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren gemäss dem Oberbegriff des Patentanspruchs 1 sowie auf einen Decoder gemäss dem Oberbegriff des nebengeordneten Patentanspruchs 2. Ein Verfahren dieser Art ist aus «Technische Mitteilungen des RFZ», 1978, H. 1, S. 8 bis 12 bekannt. Bei der elektroakustischen Übertragung einer stereofonen Schallinformation von einem Mikrofonpaar zu einem Lautsprecherpaar oder Kopfhörerpaar benutzt man zweckmässigerweise für jedes der beiden stereofonen Signale L und R einen gesonderten Übertragungskanal, beispielsweise eine von zwei nebeneinanderliegenden Spuren eines Magnetbandes, um eine wechselseitige Beeinflussung beider Signale zu vermeiden. Falls jedoch im Signalweg eine Rundfunkübertragungsstrecke liegt, lässt sich dort die geschilderte Signaltrennung nicht mehr durchführen, da auf einem der beiden Übertragungskanäle ein für monofonen Rundfunkempfang kompatibles Tonsignal übertragen werden muss, welches in gleicher Weise wie ein monofones Signal sowohl eine Information über die stereofonen Linksanteile als auch eine Information über die stereofonen Rechtsanteile enthält. Auf dem anderen Rundfunk-Übertragungskanal wird ein nicht-kompatibles Signal übertragen, aus welchem zusammen mit dem kompatiblen Signal in einem empfängerseitigen Decoder die stereofonen Links- und Rechtssignale getrennt voneinander wiedergewonnen werden können. Für den Informationsinhalt dieses nicht-kompatiblen Signals wurden zu Beginn der 60er-Jahre vor Einführung des stereofonen UKW-Rundfunks in den Vereinigten Staaten von Amerika eine Reihe von Vorschlägen gemacht (Nachrichtentechnische Zeitung (NTZ), 1961, Heft 3, Seite 137), von denen sich jedoch aufgrund der Untersuchungen eines eigens geschaffenen Komitees (NSRC) nur die Information über die Differenz R–L der stereofonen Signale als brauchbar erwies (Journal of the Audio Engineering Society, Band 23, Nr. 10 (1975), Seiten 802 bis 805). Und zwar wird nur bei der Signalmatrizierung R+L ( = kompatibles Signal) und R–L ( = nicht-kompatibles Signal) das für Rundfunkübertragungsstrecken typische stochastische Rauschen gleichmässig auf beide Decoderausgänge und damit auf die damit verbundenen Lautsprecher- bzw. Kopfhörerkanäle verteilt, weil sich die auf beiden Übertragungskanälen hinzugekommenen Rauschanteile sowohl bei der Addition als auch bei der Subtraktion der übertragenen kompatiblen und nicht-kompatiblen Signale im Decoder geometrisch addieren. Bei allen anderen Signalmatrizierungen, beispielsweise R+L, R, geht dagegen die Rauschsymmetrierung verloren (Journal of the AES, aaO, Seite 803, linke Spalte, Abs. 3).

Aufgrund dieser Untersuchungsergebnisse bei der stereofonen UKW-Übertragung, welche weltweit übernommen wurden, wurde später bei den Diskussionen der Fachwelt über Standards für die stereofone Tonübertragung im Fernsehen nur noch die Signalmatrizierung R+L, R–L in Erwägung gezogen (C.C.I.R. XIIIth Plenary Assembly, Geneva, 1974, Volume X, Seiten 131 und 132; Funkschau 1974, Heft 1, Seiten 11 bis 14; Technische Mitteilungen des RFZ, 1978, Heft 1, Seiten 8 bis 12; Journal of the Asia Electronics Union, Band 3, 1970, Nr. 2, Seiten 12 bis 21; US 4 048 654 sowie Rundfunktechnische Mitteilungen, 1978, Heft 4, Seiten 185 bis 194). In der zuletzt genannten Literaturstelle RTM 1978 wird an der Signalmatrizierung R+L, R–L sogar ungeachtet der dort im Zusammenhang mit der Untersuchung von Offset-Störungen beschriebenen Beobachtung festgehalten, dass derartige Störungen aufgrund ihres korrelierten Auftretens in beiden Rundfunk-Übertragungskanälen ungleich auf die Decoderausgänge verteilt werden, weil sie sich anders als stochastische Störungen bei der Addition und Subtraktion der übertragenen kompatiblen und nicht-kompatiblen Signale linear addieren, d.h., bei dem Subtraktionsprozess im Decoder gegenseitig auslöschen.

Die auf den Verfasser der letztgenannten Literaturstelle RTM 1978 zurückgehende DE-A 28 27 159, welche im Prioritätsintervall der vorliegenden Anmeldung veröffentlicht ist, sieht für den stereofonen Fernsehton die Signalmatrizierung R+L und 2R vor, welche eine gleichmässige Verteilung von korrelierten Störungen auf beide Decoderausgänge gewährleistet. Diese Signalmatrizierung führt jedoch bei der Umrüstung von vorhandenen, monofonen Fernsehsendern auf das stereofone Zwei-Trägerverfahren, bei welchem das kompatible und das nicht-kompatible Signal im Unterschied zur UKW-Stereofonie nicht im Frequenzmultiplex auf einem gemeinsamen Träger, sondern auf zwei um 250 kHz gegeneinander versetzten Tonträgern übertragen werden, zu Aussteuerungsproblemen. Bei der Aussteuerung eines solchen umgerüsteten Fernsehsenders wird man beide Übertragungskanäle aus Zweckmässigkeitsgründen mit demselben Frequenzhub aussteuern, was wiederum gleiche maximale Signalamplituden an den Eingängen des unverändert gelassenen Modulators erfordert. Bezeichnet man die maximalen Amplituden der stereofonen Links- und Rechtssignale L und R am Eingang der Codiermatrix mit «1», so ergeben sich wegen der Signalcodierung L+R und 2R an den Matrixausgängen bzw. den Modulatoreingängen die maximalen Signalamplituden «2». Bei vorgegebener, d.h., unverändert gelassener Modulatorkennlinie ergeben die maximalen Signalamplituden «2» beispielsweise einen maximalen Frequenzhub von 100 kHz. Im Falle eines monofonen Fernsehtons ist es ohne nachteilige Folgen zulässig, das übertragene monofone Tonsignal mit maximal 100 kHz auszusteuern, da sich in der Nachbarschaft des einzigen Tonträgers nichts befindet, was durch Kanalübersprechen gestört werden könnte. Gleiches gilt für die Übertragung der stereofonen Fernsehtonsignale im Frequenzmultiplex auf einem einzigen Tonträger (sogenanntes FM-FM-Verfahren), wie es in Japan Mitte der 70er-Jahre eingeführt wurde. Im Falle der zwei, um 250 kHz gegeneinander versetzten Tonträger des Zwei-Trägerverfahrens kann indessen eine solche Aussteuerung jedes Tonträgers mit beispielsweise 100 kHz zu einem Übersprechen zwischen den beiden Tonkanälen führen, wenn Pegel oberhalb des angenommen maximalen Signalpegels «2» an den Modulatoreingängen anliegen, was z.B. bei Konzert-Direktübertragungen häufiger vorkommt.

Die Aufgabe der vorliegenden Erfindung besteht demgegenüber darin, unter Beibehaltung des Vorteils einer gleichmässigen Verteilung korrelierter Störungen auf die Ausgänge des empfängerseitigen Decoders ein für das Zwei-Trägerverfahren spezifisches Übersprechen zwischen den beiden Fernsehton-Übertragungskanälen zu vermeiden.

Diese Aufgabe wird erfindungsgemäss durch die kennzeichnenden Merkmale des Patentanspruchs 1 gelöst. Ein für das erfindungsgemässe Verfahren speziell ausgebildeter Decoder ist in dem nebengeordneten Patentanspruch 2 angegeben, für welchen selbständiger Patentschutz unabhängig von dem Patentanspruch 1 geltend gemacht wird. Vorteilhafte Weiterbildungen und Ausgestaltungen des erfindungsgemässen Decoders nach Patentanspruch 2 ergeben sich aus den Patentansprüchen 3 und 4.

Bei dem erfindungsgemässen Verfahren ist für den speziellen Fall des Zwei-Trägerverfahrens die Signalmatrizierung $(R+L)/2$ und R vorgesehen, wodurch sich bei einer maximalen Signalamplitude von «1» für die beiden stereofonen Signale L und R an den Matrixeingängen die maximale Signalamplitude «1» an den Matrixausgängen und damit an den Modulatoreingängen ergibt. Bei unveränderter Modulatorkennlinie führt dies im Falle des eingangs betrachteten Beispiels zu einem maximalen Frequenzhub von 50 kHz statt, wie bei der Signalmatrizierung $R+L$, $2R$ zu einem maximalen Frequenzhub von 100 kHz. Für einen maximalen Frequenzhub von 50 kHz ist der Frequenzabstand von 250 kHz zwischen den beiden Tonträgern ausreichend, um auch im Falle einer Übersteuerung des Senders ein Übersprechen zwischen den beiden Übertragungskanälen mit Sicherheit zu vermeiden, ohne dass hierzu irgendwelche Änderungen am Modulator vorgenommen werden müssten.

Die Erfindung wird anhand von Ausführungsbeispielen in den Zeichnungen näher erläutert. Es zeigt:

Fig. 1 ein Blockschaltbild einer aus einem senderseitigen Coder und einem empfängerseitigen Decoder bestehenden Übertragungskette;

Fig. 2 ein Blockschaltbild einer zur wahlweisen Zweitonübertragung anstelle einer stereofonen Tonübertragung geeigneten Ausführungsform einer Übertragungskette aus senderseitigem Coder und empfängerseitigem Decoder, und

Fig. 3 ein elektrisches Schaltbild der Ausführungsform nach Fig. 2.

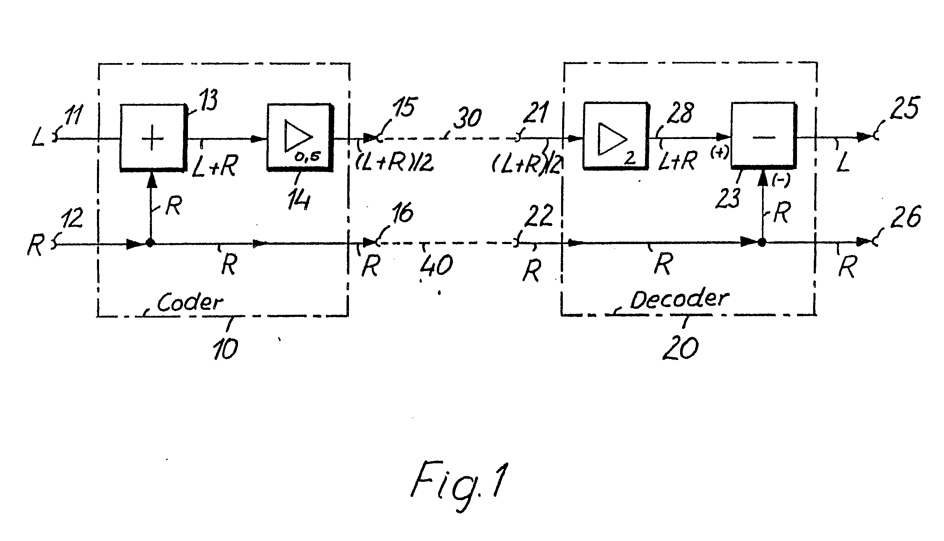

Die in Fig. 1 dargestellte Übertragungskette weist einen senderseitig angeordneten Coder 10 und einen in jedem Fernsehempfangsgerät angeordneten Decoder 20 auf, wobei zwischen dem Coder 10 und dem Decoder 20 zwei gestrichelt angedeutete Übertragungskanäle 30 und 40 vorhanden sind. Der Coder 10 wird an seinem Eingang 11 mit einem ersten, als Linksinformation L bezeichneten stereofonen Signal und an seinem Eingang 12 mit einem zweiten, als Rechtsinformation R bezeichneten stereofonen Signal gespeist. Die Eingänge 11 und 12 führen zu einem Addierglied 13, welches das Summensignal $L+R$ bildet und letzteres einem Verstärker 14 zuführt, der den Verstärkungsfaktor 0,5 besitzt. Das halbierte Summensignal $(L+R)/2$ am Ausgang des Verstärkers 14 gelangt an den Ausgang 15 des Coders 10. Der zweite Ausgang 16 des Coders 10 ist unmittelbar mit dem Eingang 12 verbunden und führt daher die Rechtsinformation R. Der Coder 10 ist Teil eines Fernsehtonsenders, der nach dem Zwei-Trägerverfahren einen stereophonen Fernsehton überträgt. Diese Übertragung erfolgt auf den beiden getrennten Kanälen 30 und 40, wobei entsprechend der dargestellten Übertragungskette das halbe Summensignal $(L+R)/2$ auf dem Kanal 30 und die Rechtsinformation R auf dem Kanal 40 übertragen werden.

Die für den Empfang eines stereophonen Fernsehtons ausgerüsteten Fernsehgeräte besitzen in ihrem Ton-Eingangsteil den Decoder 20, an dessen Eingang 21 das halbe Summensignal $(L+R)/2$ und an dessen Eingang 22 die Rechtsinformation R anliegen. Im Falle der für monophonen Fernsehton ausgerüsteten Fernsehgeräte liegt an dem Toneingang dieser Geräte nur das halbe Summensignal $(L+R)/2$ an.

Der Decoder 20 ist hinsichtlich des Signalverlaufs spiegelbildlich zu dem Coder 10 aufgebaut, wobei die in dem Coder 10 hervorgerufenen Änderungen der Links- und Rechtsinformation in dem Decoder 20 rückgängig gemacht werden, so dass an dessen Ausgängen 25 und 26 die Linksinformation L bzw. die Rechtsinformation R anliegen. Im einzelnen sind dem Eingang 21 des Decoders 20 ein Verstärker 24 mit dem Verstärkungsfaktor 2 und ein Subtrahierglied 23 nachgeschaltet, wobei der Ausgang 28 des Verstärkers 24 mit dem (+)-Eingang des Subtrahiergliedes 23 verbunden ist. Infolge des Verstärkungsgrades 2 entsteht am Ausgang 28 des Verstärkers 24 das Summensignal $L+R$. Der Eingang 22 des Decoders 20, welcher die Rechtsinformation R erhält, ist einerseits direkt mit dem Ausgang 26 und andererseits mit dem (−)-Eingang des Subtrahiergliedes 23 verbunden. Dadurch wird von dem Summensignal $L+R$ am (+)-Eingang des Subtrahiergliedes 23 die Rechtsinformation R abgezogen, so dass an dessen Ausgang nur noch die Linksinformation L verbleibt, die dem Ausgang 25 des Decoders 20 zugeführt wird.

Nimmt man an, dass in den Übertragungskanälen 30 und 40 eine korrelierte Störung auftritt, so addiert sich die Störgrösse S in dem Kanal 30 zu dem dort vorhandenen halben Summensignal, woraus sich der Ausdruck $(L+R)/2+S$ ergibt. In dem Kanal 40 addiert sich die Störgrösse S zu der dort vorhandenen Rechtsinformation, woraus sich der Ausdruck $R+S$ ergibt. Am Ausgang 28 des Verstärkers 24 ergibt sich dann der Ausdruck L+R+2S, von welchem in dem Subtrahierglied 23 der Ausdruck R+S abgezogen wird. Das hieraus resultierende Signal am Ausgang 25 entspricht dem Ausdruck L+S. Da am Ausgang 26 das gleiche Signal wie am Eingang 22 anliegt, entspricht das Signal am Ausgang 26 dem Ausdruck R+S. Man erkennt hieraus, dass an den Ausgängen 25 und 26 jeweils die Störgrösse S den dort vorhandenen Links- bzw. Rechtsinformationen hinzuaddiert ist, d.h. dass die Störgrösse S auf beide Wiedergabekanäle gleichmässig verteilt ist.

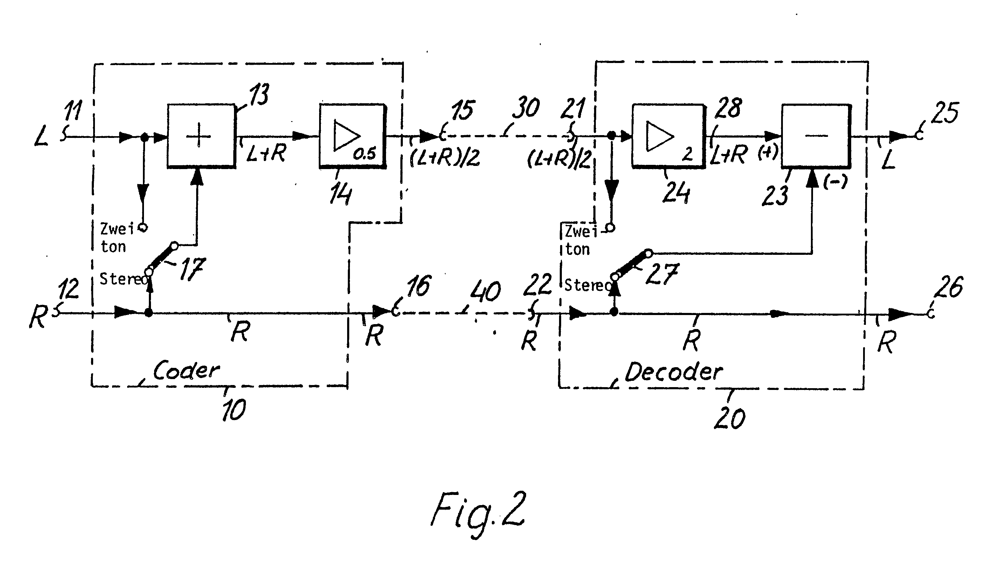

Eine Weiterbildung der Einrichtung nach Fig. 1 ist in Fig. 2 veranschaulicht, welche sich dadurch unterscheidet, dass zusätzlich die Umschalter 17 und 27 im Coder 10 bzw. Decoder 20 vorgesehen sind. Der Umschalter 17 verbindet wahlweise die Eingänge 11 und 12 mit dem zweiten Eingang des Addiergliedes 13, während der Umschalter 27 wahlweise die Eingänge 21 und 22 mit dem (–)-Eingang des Subtrahiergliedes verbindet. In der eingezeichneten Stellung des Umschalters 17 und 27 entspricht die Einrichtung gemäss Fig. 2 hinsichtlich der Signalabläufe vollständig der Einrichtung gemäss Fig. 1, d.h. sie dient zur Aussendung und zum Empfang eines stereophonen Signals mit einer Rechtsinformation R und einer Linksinformation L.

In der anderen, nicht eingezeichneten Stellung der Umschalter 17 und 27 dient die Einrichtung nach Fig. 2 zur sogenannten Zweitonübertragung, bei welcher über den Kanal 30 beispielsweise ein Gespräch in deutscher Sprache und über den Kanal 40 die dazu simultane Übersetzung in englischer Sprache übertragen werden.

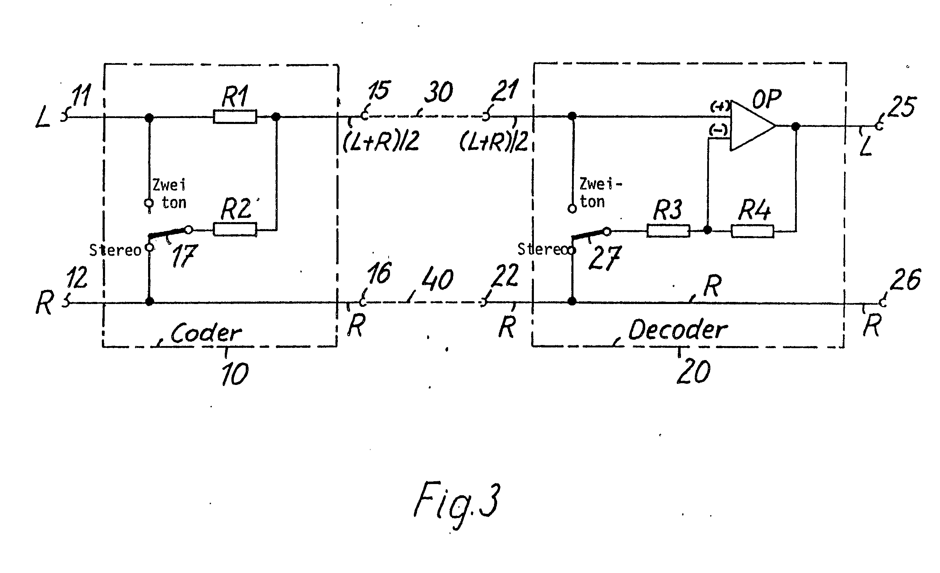

Eine besonders einfache schaltungstechnische Realisierung der Einrichtung nach Fig. 2 ist an Hand von Fig. 3 veranschaulicht. Wie hieraus hervorgeht, besteht das Addierglied 13 und der Verstärker 14 aus den beiden, gabelförmig geschalteten ohm'schen Widerständen R1 und R2, welche den gleichen Wert besitzen. Ferner besteht der Verstärker 24 und das Subtrahierglied 23 aus einem gegengekoppelten Operationsverstärker OP und einem am invertierenden Eingang des Operationsverstärkers OP liegenden ohm'schen Widerstand R3. Der Widerstand R3 sowie der Gegenkopplungswiderstand R4 besitzen den gleichen Wert wie die Widerstände R1 und R2.

Es versteht sich, dass die vorliegend verwendeten Ausdrücke «Rechtsinformation» und «Linksinformation» lediglich eine Frage der Definition sind und im Rahmen der Erfindung gegenseitig vertauscht werden können.

**Patentansprüche**

1. Verfahren zum Übertragen eines stereofonen Signals auf zwei getrennten, in einem Fernsehsignal enthaltenen Tonträgern, wobei auf dem einen Tonträger ein für monofonen Empfang kompatibles Signal übertragen wird, welches eine Information sowohl über die stereofone Links- als auch die stereofone Rechtsinformation enthält, und wobei auf dem anderen Tonträger ein nicht-kompatibles Signal übertragen wird, aus welchem zusammen mit dem kompatiblen Signal die Links- und Rechtsinformationen getrennt voneinander wiedergewonnen werden können, dadurch gekennzeichnet, dass senderseitig ein die Rechtsinformation darstellendes Signal (R) und ein in entsprechender Weise die Linksinformation darstellendes Signal (L) addiert werden und die Summe sodann durch Zwei dividiert wird, dass dieses letztere Signal als halbiertes Summensignal

$$(\frac{R+L}{2})$$

auf dem einen Tonträger und das die Rechtsinformation darstellende Signal (R) auf dem anderen Tonträger in identischer Weise übertragen werden, und dass empfängerseitig das halbierte Summensignal

$$(\frac{R+L}{2})$$

mit Zwei multipliziert wird und sodann das die Rechtsinformation darstellende Signal (R) von diesem multiplizierten Signal (R+L) subtrahiert wird, wodurch die Signale der Links- bzw. der Rechtsinformation getrennt wiederhergestellt werden.

2. Decoder zum Wiedergewinnen der Rechts- und Linksinformationen aus einem stereofonen Signal, welches auf zwei getrennten, in einem Fernsehsignal enthaltenen Tonträgern übertragen wird und welches senderseitig in der Weise gebildet wird, dass ein die stereofone Rechtsinformation darstellendes Signal und ein in entsprechender Weise die stereofone Linksinformation darstellendes Signal addiert werden und die Summe sodann durch Zwei dividiert wird, und dass dieses letztere Signal als halbiertes Summensignal auf dem einen Tonträger und das die Rechtsinformation darstellende Signal auf dem anderen Tonträger in identischer Weise übertragen werden, dadurch gekennzeichnet, dass einem ersten Decodereingang (21), welchem das halbierte Summensignal

$$(\frac{R+L}{2})$$

zugeführt wird, ein Verstärker (24) mit dem Verstärkungsfaktor Zwei nachgeschaltet ist, und dass der Ausgang (28) des Verstärkers (24) mit einem (+)Eingang eines Subtrahiergliedes (23) verbunden ist, dessen (–)Eingang mit einem zweiten Decodereingang (22), welchem das die Rechtsinformation darstellende Signal (R) zugeführt wird, verbunden ist.

3. Decoder nach Anspruch 2, zum wahlweisen Wiedergewinnen eines stereofonen Signals oder von zwei getrennten, auf den beiden Tonträgern übertragenen monofonen Signalen, dadurch gekennzeichnet, dass der (–)Eingang des Subtrahiergliedes (23) über einen Umschalter (27) wahlweise mit einem der beiden Decodereingänge (21, 22) verbindbar ist.

4. Decoder nach Anspruch 3, dadurch gekennzeichnet, dass als Subtrahierglied (23) und als Verstärker (24) ein einziger Operationsverstärker (OP) vorgesehen ist, dessen nicht-invertierender Eingang (+) unmittelbar mit dem ersten Decodereingang (21) verbunden ist und dessen invertierender Eingang (–) einerseits über einen Widerstand (R3) mit dem Schaltkontakt des Umschalters (27) und andererseits über einen weiteren, dem ersten Widerstand (R3) betragsgleichen Widerstand (R4) mit dem Ausgang des Operationsverstärkers (OP) verbunden ist.

**Claims**

1. A method of transmitting a stereophonic signal on two separate sound carriers contained in a television signal, wherein a signal which is compatible for "mono" reception and which contains information both about the stereophonic left-hand and about the stereophonic right-hand information is transmitted over the one sound carrier and wherein a non-compatible signal, out of which, together with the compatible signal, the left-hand and right-hand information can be recovered separately from one another, is transmitted on the other sound carrier, characterised in that, at the transmitter end, a signal (R) representig the right-hand information and a signal (L) representing the left-hand information in a corresponding manner are added and the sum is then divided by two, that this last signal is transmitted, as the halved sum signal

$$(\frac{R+L}{2}),$$

on the one sound carrier and the signal (R) representing the right-hand information is transmitted in an identical manner on the other sound carrier, and that, at the receiver end, the halved sum signal

$$(\frac{R+L}{2})$$

is multiplied by two and then the signal (R) representing the right-hand information is subtracted from this multiplied signal (R+L), as a result of which the signals of the left-hand information and right-hand information are restored separately.

2. A decoder for recovering the right-hand and left-hand information from a stereophonic signal which is transmitted on two separate sound carriers contained in a television signal and which is formed at the transmitter end in that a signal representing the stereophonic right-hand information and a signal representing the stereophonic left-hand information in a corresponding manner are added and the sum is then divided by two and that this last signal is transmitted, as the halved sum signal, on the one sound carrier and the signal representing the right-hand information is transmitted on the other sound carrier in an identical manner, characterised in that a first decoder input (21) to which the halved sum signal

$$(\frac{R+L}{2})$$

is applied is followed by an amplifier (24) with the amplification factor two, and that the output (28) of the amplifier (24) is connected to a (+) input of a subtracter (23), the (–) input of which is connected to a second decoder input (22) to which the signal (R) representing the right-hand information is fed.

3. A decoder as claimed in claim 2, for the selective recovery of a stereophonic signal or of two separate "mono" signals transmitted on the two sound carriers, characterised in that the (–) input of the subtracter (23) can be connected selectively, through a change-over switch (27), to one of the two decoder inputs (21, 22).

4. A decoder as claimed in claim 3, characterised in that a single operational amplifier (OP) is provided as subtracter (23) and as amplifier (24), of which the non-inverting input (+) is connected directly to the first decoder input (21) and of which the inverting input (–) is connected, on the one hand to the switch contact of the change-over switch (27) through a resistor (R3) and, on the other hand, to the output of the operational amplifier (OP) through a further resistor (R4) which is like the first resistor (R3) in value.

**Revendications**

1. Procédé pour la transmission d'un signal stéréophonique sur deux porteuses son distinctes, contenues dans un signal de télévision, un signal compatible pour une réception monophonique étant transmis sur une des porteuses son, signal qui comporte une information aussi bien sur l'information stéréophonique gauche que sur l'information stéréophonique droite, et sur l'autre porteuse son étant transmis un signal non compatible, à partir duquel on peut récupérer conjointement avec le signal compatible, les informations gauche et droite séparément l'une de l'autre, caractérisé en ce que côté émetteur, un signal (R) représentant l'information droite et un signal (L) représentant d'une façon semblable l'information gauche sont additionnés et la somme est ensuite divisée par deux, en ce que ce dernier signal en tant que demi signal de somme (R+L/2) est transmis sur l'une des porteuses son et le signal représentant l'information droite (R) est transmis de façon identique sur l'autre porteuse son, et en ce que côté récepteur, le demi signal de somme (R+L/2) est multiplié par deux et ensuite le signal représentant l'information droite (R) est soustrait de ce signal multiplié (R+L), de telle sorte que les signaux des informations gauche et droite sont rétablis séparément.

2. Décodeur pour récupérer les informations droite et gauche à partir d'un signal stéréophonique, qui est transmis sur deux porteuses son distinctes, contenues dans un signal de télévision, et qui est formé côté émetteur de telle sorte qu'un signal représentant l'information stéréophonique droite et un signal représentant d'une façon correspondante l'information stéréophonique gauche soient additionnés et la somme soit ensuite divisée par deux, et que ce dernier signal en tant que demi signal de somme soit transmis sur une des porteuses son et le signal représentant l'information droite soit transmis sur l'autre porteuse son d'une manière identique, caractérisé en ce qu'une première entrée de décodeur (21), à laquelle est appliqué le demi signal de somme (R+L/2), est suivie par un amplificateur (24) avec un facteur d'amplification de deux, et en ce que la sortie (28) de l'amplificateur (24) est reliée à une entrée (+) d'un circuit sous-tracteur (23), dont l'entrée (–) est reliée à une seconde entrée de décodeur (22), à laquelle est appliquée le signal (R) représentant l'information droite.

3. Décodeur suivant la revendication 2, pour la récupération sélective d'un signal stéréophonique ou de deux signaux monophoniques distincts transmis sur les deux porteuses son, caractérisé en ce que l'entrée (–) du circuit soustracteur (23) peut être reliée sélectivement, par l'intermédiaire d'un inverseur (27), à l'une des deux entrées de décodeur (21, 22).

4. Décodeur suivant la revendication 3, caractérisé en ce que l'on prévoit en tant que circuit soustracteur (23) et en tant qu'amplificateur (24), un unique amplificateur opérationnel (OP), dont l'entrée non-inverseuse (+) est directement reliée à la première entrée de décodeur (21), et dont l'entrée inverseuse (–) est reliée, d'une part, par une résistance (R3) au contact de commande de l'inverseur (27) et, d'autre part, par une autre résistance (R4), identique en valeur à la première résistance (R3), à la sortie de l'amplificateur opérationnel (OP).

Fig.1

*Fig. 2*

0 014 348

Fig.3

L $\quad$ 11

R $\quad$ 12

R1

R2

Zwei ton

Stereo $\quad$ 17

Coder

10

15 $\quad$ 30 $\quad$ 21

(L+R)/2 $\quad$ (L+R)/2

16 $\quad$ 40 $\quad$ 22

R $\quad$ R

OP

(+)

(−)

Zwei ton

Stereo $\quad$ 27

R3 $\quad$ R4

Decoder

20

25

L

26

R

R

0 014 348